# EUROPEAN PATENT APPLICATION

(11) **EP 2 283 911 A1**
(43) Date of publication of application: **16.02.2011**
(21) Application number: 09167648.6
(22) Date of filing: 11.08.2009
(51) Int. Cl.: B01D 53/14, B01D 53/52, C10L 3/10

(54) **Process for removing CO2 and/or H2S from a gas comprising CO2 and/or H2S**

(71) Applicant: Shell Internationale Research Maatschappij B.V., 2596 HR The Hague (NL)
(72) Inventor: Geuzebroek, Frank Haiko, 1031 HW Amsterdam (NL); Last, Thijme, 1031 HW Amsterdam (NL); Schneider, Armin, 1031 HW Amsterdam (NL); Wijntje, Renze, 1031 HW Amsterdam (NL); Zhang, Xiaohui, 1031 HW Amsterdam (NL)
(74) Representative: Matthezing, Robert Maarten

(57) **Abstract**

A process for removing CO₂ and/or H₂S from a gas comprising the steps of:
(a) contacting the gas in an absorber with an absorbent composition at a temperature in the range from 5 to 60°C, wherein the absorbent composition absorbs at least part of the CO₂ and/or H₂S, to produce a CO₂ and/or H₂S lean gas and a CO₂ and/or H₂S rich absorbent composition;
(b) removing at least part of the CO₂ and/or H₂S from the CO₂ and/or H₂S rich absorbent composition in a regenerator operated at a temperature below 100°C, to produce a CO₂ and/or H₂S rich gas and a CO₂ and/or H₂S lean absorbent composition;
wherein the absorbent composition comprises a polyamine having 3 to 5 amine functions, a tertiary monoamine and water; and wherein the molar ratio of the polyamine having 3 to 5 amine functions to the tertiary monoamine is equal or less than 4:1.

## Description

### Field of the invention

The invention relates to a process for removing carbon dioxide (CO₂) and/or hydrogen sulfide (H₂S) from a gas comprising CO₂ and/or H₂S.

### Background of the invention

During the last decades there has been a substantial global increase in the amount of CO₂ emission to the atmosphere. Emissions of CO₂ into the atmosphere are thought to be harmful due to its "greenhouse gas" property, contributing to global warming. Following the Kyoto agreement, CO₂ emission has to be reduced in order to prevent or counteract unwanted changes in climate. Sources of CO₂ emission include the combustion of fossile fuels, for example coal or natural gas, for electricity generation and the use of petroleum products as a transportation and heating fuel. These processes result in the production of gases comprising CO₂. Thus, removal of at least part of the CO₂ from these gases prior to emission of these gases into the atmosphere is desirable.

In addition, there is a desire to limit and reduce H₂S emission into the environment.

The removal of CO₂ and/or H₂Sfrom a gas comprising CO₂ and/or H₂S can be carried out by using an absorbent composition to absorb the CO₂ and/or H₂S from the gas to generate a CO₂ and/or H₂S lean gas and a CO₂ and/or H₂S rich absorbent composition. The CO₂ and/or H₂S rich absorbent composition can be regenerated, for example by stripping, to generate a CO₂ and/or H₂S rich gas and a CO₂ and/or H₂S lean absorbent composition, whereafter the CO₂ and/or H₂S lean absorbent composition can be recycled.

Processes for the removal of CO₂ and/or H₂S are known in the art. For example, in US2006/0104877, a method of deacidizing a gaseous effluent comprising an acid compound such as carbon dioxide or hydrogen sulfide is described, wherein the gaseous effluent is contacted with an absorbent solution so as to obtain a gaseous effluent depleted in acid compounds. The absorbent solution can consist of one or more compounds reactive with or having a physico-chemical affinity with the acid compound and possibly one or more solvation compounds. As reactive compounds alkanolamines and polyamines are mentioned. A list of more than 80 possible reactive compounds is described, mentioning in passing N,N-dimethylethanolamine, N,N-dimethyldipropylenetriamine and diethylenetriamine. The reactive compounds are said to represent 10 to 100% by weight of the absorbent, preferably 25 to 90% by weight and ideally 40 to 80% by weight. The absorbent solution is stated to possibly also contain one or more activators for favouring absorption of the compounds to be treated. As examples amines are mentioned. A list of about 80 possible activators is described, mentioning in passing N,N-dimethyldipropylenetriamine. The list of possible activators does not include any tertiary amines. The activator concentration is stated to range between 0 and 30% by weight, preferably between 0 and 15% by weight of the absorbent solution.

EP2036602 describes an absorbent liquid and a method for removing CO₂ or H₂S from a gas with use of such absorbent liquid wherein the absorbent liquid comprises a first compound component and a second compound component. The first compound component is represented by a series of three formulae of nitrogen-containing compounds, of which each formula I and II comprises one tertiary amine function. The second compound component is said to include a nitrogen-containing compound having in a molecule thereof at least two members selected from a primary nitrogen, a secondary nitrogen and a tertiary nitrogen, or a nitrogen containing compound having in a molecule thereof all of primary, secondary and tertiary nitrogens. As an example of the first compound component 2-dimethylaminoethanol is mentioned. For the second compound component some 10 different possible chemical formulae are mentioned, each formulae covering a wide range of possible nitrogen containing compounds. Ringshaped compounds are indicated to be preferred. The first compound component is said to preferably be contained in an amount in a range from equal to or larger than 15 wt% to equal to or less than 45 wt% and the second compound component is said to be preferably contained in a similar amount. The total amount of the first compound component and the second compound component are stated to preferably be more than 30 wt% to equal or less than 90 wt%.

In a presentation of Peter Bruder given at the joint seminar on CO₂ absorption fundamentals NTNU in Trontheim on 15 June 2009 (published via the internet website of the Norges teknisk-naturvitenskapelige universitet), a system comprising N,N-dimethylethanolamine and methylaminopropyleneamine is described for the absorption of CO₂. On sheets 14 and 15 of the presentation graphics for the CO2 loading for systems comprising N,N-dimethylethanolamine (DMMEA) and methylaminopropyleneamine (MAPA) in molar ratios of respectively 3:2 and 5:1 are shown. The graphics illustrate that when absorption is carried out at a partial CO₂ pressure of for example about 10 KPa and a temperature of about 40 °C (allowing for CO₂ loadings of respectively about 0.72 and about 0.50 mole CO_{2/}mole amine), the skilled person could expect that desorption at a partial CO₂ pressure of for example about 100 KPa (about 1 bar) and and a temperature of about 60 °C with these systems would not be possible. As illustrated in sheets 14 and 15, such desorption would require higher temperatures such as 100 or 120 °C.

Hence, the regeneration of the CO₂ and/or H₂S rich absorbent composition can require an extensive amount of energy.It would be desirable to provide an absorbent composition and a process that allows for regeneration of the CO₂ and/or H₂S rich absorbent composition at a minimal amount of energy, whilst on the other hand obtaining a good removal of carbon dioxide from CO₂ and/or H₂S rich absorbent composition.

### Summary of the invention

Accordingly the present invention provides a process for removing CO₂ and/or H₂S from a gas comprising CO₂ and/or H₂S, the process comprising the steps of:
(a) contacting the gas in an absorber with an absorbent composition at a temperature in the range from 5 to 60 °C, wherein the absorbent composition absorbs at least part of the CO₂ and/or H₂S in the gas, to produce a CO₂ and/or H₂S lean gas and a CO₂ and/or H₂S rich absorbent composition;
(b) removing at least part of the CO₂ and/or H₂S from the CO₂ and/or H₂S rich absorbent composition in a regenerator operated at a temperature below 100°C, to produce a CO₂ and/or H₂S rich gas and a CO₂ and/or H₂S lean absorbent composition;
wherein the absorbent composition comprises a polyamine, a monoamine and water,
wherein the polyamine comprises a polyamine having 3 to 5 amine functions;
wherein the monoamine comprises a tertiary monoamine; and
wherein the molar ratio of the polyamine having 3 to 5 amine functions to the tertiary monoamine is equal or less than 4:1.

The combination of the absorbent composition and regeneration temperature in the process of the invention advantageously allows for the removal of CO₂ and/or H₂S from a CO₂ and/or H₂S rich absorbent composition by using a minimal amount of energy, whilst on the other hand a good removal of carbon dioxide from CO₂ and/or H₂S rich absorbent composition is still obtained.

### Brief description of the drawings

The invention is illustrated with the enclosed figures:
- Figure 1:: Schematic flowchart showing an embodiment of the process of the invention.
- Figure 2:: Graphic of obtained CO₂ loading in moles CO2 per 100 ml absorbent composition at 23 °C and several CO₂ partial pressures for an absorbent composition comprising 4 Molair N,N- dimethyldipropylenetriamine
- Figure 3:: Graphic of obtained CO₂ loading in moles CO₂ per 100 ml absorbent composition at 23 °C and several CO₂ partial pressures for an absorbent composition comprising 4 Molair N,N- dimethylethanolamine.
- Figure 4:: Graphic of obtained CO₂ loading in moles CO₂ per 100 ml absorbent composition at 23 °C and several CO₂ partial pressures for an absorbent composition comprising 0.8 Molair N,N- dimethyldipropylenetriamine 3.2 Molair N,N- dimethylethanolamine.
- Figure 5:: Graphic of obtained CO2 loading in moles CO₂ per 100 ml absorbent composition at 23 °C and several CO₂ partial pressures for an absorbent composition comprising 1.6 Molair N,N- dimethyldipropylenetriamine 2.4 Molair N,N- dimethylethanolamine.
- Figure 6:: Graphic of obtained CO₂ loading in moles CO₂ per 100 ml absorbent composition at 23 °C and several CO₂ partial pressures for an absorbent composition comprising 2 Molair N,N- dimethyldipropylenetriamine 2 Molair N,N- dimethylethanolamine.
- Figure 7:: Graphic of obtained CO₂ loading in moles CO₂ per 100 ml absorbent composition at 23 °C and several CO₂ partial pressures for an absorbent composition comprising 2.4 Molair N,N- dimethyldipropylenetriamine 1.6 Molair N,N- dimethylethanolamine.
- Figure 8:: Graphic of obtained CO₂ loading in moles CO₂ per 100 ml absorbent composition at 23 °C and several CO₂ partial pressures for an absorbent composition comprising 3.2 Molair N,N- dimethyldipropylenetriamine 0.8 Molair N,N- dimethylethanolamine.

### Detailed description of the invention

As indicated above, the absorbent composition comprises a polyamine, a monoamine and water. The absorbent composition can comprise one or more polyamines, preferably 1 to 4, more preferably 1 to 3 and most preferably 1 or 2 polyamines. At least one of the polyamines comprises a polyamine having 3 to 5 amine functions. By an amine function is understood a group comprising a nitrogen atom. Amine functions are sometimes also referred to as amino groups, amine groups or nitrogen-containing groups. The absorbent composition can comprise one or more polyamines having 3 to 5 amine functions and preferably comprises 1 to 4, more preferably 1 to 3 and most preferably 1 or 2 polyamines having 3 to 5 amine functions.

Preferably the polyamine having 3 to 5 amine functions is a non-cyclic polyamine having 3 to 5 amine functions. More preferably the polyamine having 3 to 5 amine functions is a polyamine of formula I: 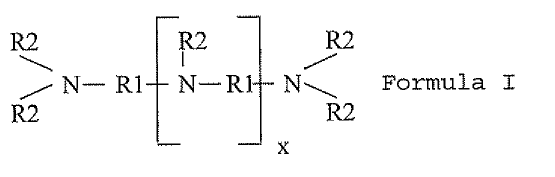 wherein each R1 independently represents a substituted or non-substituted alkylene group comprising 1 to 6 carbon atoms; wherein each R2 independently represents hydrogen, a hydroxyl group or a hydrocarbyl group comprising 1 to 12 carbon atoms; and wherein x can be 1, 2 or 3.

It is to be understood that each R1 independently can represent a different substituted or non-substituted alkylene group comprising 1 to 6 carbon atoms. For example, one R1 group can be a non-substituted alkylene group of 2 carbon atoms and the other R1 group can be an oxygen substituted alkylene group having 3 carbon atoms. Preferably each R1 independently represents a substituted or non-substituted alkylene group comprising 2 to 6, more preferably 2 to 4 carbon atoms. If substituted, a R1 group is preferably substituted with an oxygen containing group such as a ketone or hydroxyl group. Preferably the R1 alkylene groups are non-substituted. More preferably each R1 independently represents a methylene, ethylene, propylene, tetramethylene or pentamethylene group, more preferably an ethylene or propylene group and most preferably a propylene group.

It is to be understood that each R2 independently can represent a different group. For example, one R2 group can be a hydrogen group and another R2 group can be a hydrocarbyl group such as an ethyl, ethoxy or hydroxyethyl group. By a hydrocarbyl group is understood a group comprising both hydrogen as well as carbon atoms. Examples of hydrocarbyl groups include alkyl groups, alkyloxy groups, hydroxyalkyl groups and carboxyl groups. Preferably each R2 independently represents hydrogen, a hydroxyl group or a substituted or non-substituted hydrocarbyl group comprising 2 to 6 carbon atoms, more preferably 2 to 4 hydrocarbon atoms. Preferably each R2 independently represents hydrogen, a hydroxyl group or a methyl, ethyl, n-propyl, iso-propyl, n-butyl, iso-butyl, tert-butyl, pentyl, methyloxy, ethyloxy, n-propyloxy, iso-propyloxy, hydroxymethyl, hydroxyethyl, or hydroxypropyl group, more preferably hydrogen or a methyl or ethyl group and most preferably hydrogen or a methyl group.

In a further preferred embodiment at most 1 or 2, more preferably at most 1 of the R2 groups represents a hydroxyl group, such that the polyamine having 3 to 5 amine groups comprises at most one or two, more preferably at most one hydroxyl group.

Preferably x is 1 or 2, that is, preferably the polyamine comprises a polyamine having 3 or 4 amine functions. Most preferably x is 1 and the polyamine comprises a polyamine having 3 amine functions.

In a preferred embodiment the polyamine having 3 to 5 amine functions comprises at least one secondary amine function. More preferably the polyamine comprises at least one tertiary amine function and least one secondary amine function. Most preferably the polyamine comprises at least one tertiary amine function at least one secondary amine function and at least one primary amine function.

Examples of polyamines having 3 to 5 amine functions that can be used in the absorbent composition or process according to the invention include: N-(2-aminoethyl)-1,3-propanediamine, Dipropylenetriamine (N-(3-aminopropyl)1,3-propanediamine), Spermidine (N-(4-aminobutyl)-1,3-propanediamine), N,N-Dimethylaminopropylaminopropylamine, Diethylenetriamine (N-(2-aminoethyl)-1,2-ethanediamine), N,N-dimethyldiethylenetriamine, N,N,N',N",N"-pentamethyldiethylenetriamine. N,N,N',N",N"-pentamethyldipropylenetriamine (N-(3-(dimethylamino)propyl)-N,N',N'-trimethylpropane-1,3-diamine), N,N,N",N"-tetramethyldipropylenetriamine, 4-dodecyldiethylene triamine, Spermine (N-(3-aminopropyl)dipropylenetriamine), tris(2-aminoethyl)amine, Triethylenetetramine, N,N-dimethyltriethylenetetramine, tetraethylenepentamine and mixtures thereof. Preferably the polyamine having 3 to 5 amine functions comprises diethylenetriamine, dimethylaminopropylaminopropylamine or a combination thereof.

In addition to the polyamine having 3 to 5 amine functions other polyamines may be present in the absorbent composition. Other polyamines that may additionally be used in the absorbent composition or process according to the invention include piperazine, methylaminopropyleneamine, N,N'-Dimethylpiperazine, N,N'-Diethylpiperazine, N,N'-Diethanolpiperazine, N,N,N',N'-Tetraethyl-ethylenediamine, N,N,N',N'-Tetramethyl-1,3-propanediamine, N,N,N',N'-Tetraethyl-propanediamine, N,N,N',N'-Tetramethyl-1,4-butanediamine and mixtures thereof.

The absorbent composition can comprise one or more monoamines, preferably 1 to 4, more preferably 1 to 3 and most preferably 1 or 2 monoamines.

At least one of the monoamines comprises a tertiary monoamine. The absorbent composition can comprise one or more tertiary monoamines and preferably comprises 1 to 4, more preferably 1 to 3 and most preferably 1 or 2 tertiary monoamines.

Preferably the tertiary monoamine is a non-cyclic tertiary monoamine. More preferably the tertiary monoamine is a monoamine of formula II: 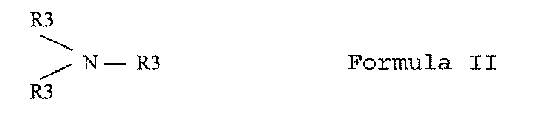 wherein each R3 independently can represent an hydroxyl group or an hydrocarbyl group comprising 1 to 6 carbon atoms.

It is to be understood that each R3 independently can represent a different group. For example, one R3 group can be a methyl group and another R3 group can be an ethyl, ethoxy or hydroxyethyl group. Examples of hydrocarbyl groups that can be used as R3 include alkyl groups, alkyloxy groups, hydroxyalkyl groups and carboxyl groups. Preferably each R3 independently represents a hydroxyl or a substituted or non-substituted hydrocarbyl group comprising 2 to 6 carbon atoms, more preferably 2 to 4 hydrocarbon atoms.

Preferably each R3 independently represents a hydroxyl, methyl, ethyl, propyl, iso-propyl n-butyl, iso-butyl, tert-butyl, pentyl, methyloxy, ethyloxy, propyloxy, iso-propyloxy, methylsulfanyl, ethylsulfanyl, propylsulfanyl or isopropylsulfanyl group. Most preferably each R3 independently represent a methyl, ethyl, methyloxy or ethyloxy group.

In a one preferred embodiment at most 1 or 2, more preferably at most 1 of the R3 groups represents a hydroxyl group, such that the tertiary monoamine comprises at most one or two, more preferably at most one hydroxyl group.

In another preferred embodiment, one R3 comprises an alkyloxy or hydroxyalkyl group comprising 1 to 3 carbon atoms and the other R3 groups independently comprise an alkylgroup comprising 1 or 2 carbon atoms.

Examples of tertiary mono-amines that can be used in the absorbent composition or process according to the invention include Dimethylaminoethanol, N,N-Diethylethanolamine, 1-Diethylamino-2-propanol, 1-Dimethylamino-2-propanol, 3-Dimethylamino-1-propanol, 3-Diethylamino-1-propanol, 3-Diethylamino-1,2-propanediol, 2-Ethylmethylamino-1-ethanol, 2-Dipropylamino-1-ethanol , Methyldiethanolamine, Dimethylpropylamine, N-methyldibutylamine, Dimethylcyclohexylamine, N,N,-diethylhydroxylamine, Diisopropylethylamine, 4-(diethylamino)-2-butariol, 4-(dipropylamino)-2-butanol, 4-(propylisopropylamino)-2-butanol or mixtures thereof.

Preferably the tertiary monoamine comprises N,N-dimethylmonoethanolamine, N,N-diethylmonoethanolamine, or a combination thereof. Most preferably the tertiary monoamine is dimethylmonoethanolamine.

In addition to the tertiary monoamine other monoamines may be present in the absorbent composition. Other monoamines that may additionally be used in the absorbent composition or process according to the invention include Aminomethylpropanol, 2-Amino-2-methyl-1,3-propandiol, Methylcyclohexylamine, Diethanolamine, 1-amino-2-propanol 2-amino-2-methyl-1,3-propanediol, 4-(propylamino)-2-butanol, 4-(isopropylamino)-2-butanol or mixtures thereof.

The molar ratio of the polyamine component having 3 to 5 amine functions to the tertiary monoamine component is preferably less than 4:1, more preferably equal to or less than 3:1 and still more preferably equal to or less than 2:1. Most preferably the molar ratio of the polyamine component having 3 to 5 amine functions to the tertiary monoamine component is equal to or less than 1:1. Preferably the molar ratio of the polyamine component having 3 to 5 amine functions to the tertiary monoamine component is more than 1:10, more preferably equal to or more than 1:8, still more preferably equal to or more than 1:4, even more preferably equal to or more than 1:3, and most preferably equal to or more than 1:2.

Preferably the molar ratio of the polyamine component having 3 to 5 amine functions to the tertiary monoamine component lies in the range from more than 1:4 and less than 1:1, more preferably in the range from more than 1:3 to less than 1:1, still more preferably in the the range from more than 1:2 to less than 1:1.1.

Without wishing to be bound by any kind of theory it is believed that with molar ratio's of more than 1:4 and less than 1:1 the lowest temperatures can be used.

In a preferred embodiment the regenerator is therefore operated at a temperature equal to or below 90 °C and the molar ratio of the polyamine having 3 to 5 amine functions to the tertiary monoamine is equal or less than 1:1.

In a further preferred embodiment the regenerator is operated at a temperature equal to or below 75 °C and the molar ratio of the polyamine having 3 to 5 amine functions to the tertiary monoamine lies in the range from more than 1:4 to less than 1:1.

The polyamine component having 3 to 5 amine functions is preferably present in the absorbent composition in a concentration in the range from 10 - 65 wt%.

The tertiary monoamine component is preferably present in the absorbent composition in a concentration in the range from 5 - 60 wt%.

As indicated above, the aqueous absorbent composition comprises a polyamine, a monoamine and water. In a preferred embodiment the total weight percentage of polyamine and monoamine is less than or equal to 70 wt% based on the total absorbent composition, preferably less than or equal to 65 wt%, still more preferably less than or equal to 55 wt% based on the total absorbent composition.

The absorbent composition may further contain one or more additional physical solvent compounds. Suitable physical solvent compounds include glycols, polyethylene glycols, polypropylene glycols, ethylene, glycol-propylene glycol copolymers, glycol ethers, alcohols, ureas, lactames, N-alkylated pyrrolidones, N-alkylated piperidones, cyclotetramethylene sulfones, N-alkylformamides, N-alkylacetamides, ether-ketones or alkyl phosphates and derivatives or combinations thereof. Preferred physical solvent compounds include N-methyl-pyrrolidon, tetramethylenesulfon (sulfolane), methanol, dimethylether compounds of polyethylene glycol or combinations thereof. If such an additional physical solvent compound is present, the absorbent composition, preferably comprises in the range from 10 to 70 wt%, preferably 30 to 60 wt% of the additional physical solvent compound.

Furthermore a corrosion inhibitor can added to the absorbent composition. Suitable corrosion inhibitors are described for example in US 6,036,888, US2006/0104877 and US2004/0253159. The use of such a corrosion inhibitor may be especially advantageous when the gas comprising CO₂ and/or H₂S comprises an appreciable quantity of oxygen, suitably in the range of from 1 to 22% (v/v) of oxygen.

Furthermore degradation inhibitors and/or foaming inhibitors can be added to the absorbent composition.

The gas comprising CO₂ and/or H₂S that may be used as a feed gas in the process of the invention can be any gas known by the skilled person in the art to comprise CO₂ and/or H₂S. For example the gas comprising CO₂ and/or H₂S may comprise a natural gas, synthetic natural gas, synthesis gas, combustion fumes, refinery gas, Claus tail gas or biomass fermentation gas. The gas, especially if such gas comprises combustion fumes and/or is a so-called flue gas, preferably comprises in the range from 50 ppmv to 70 vol.%, more preferably from 100 ppmv to 30 vol.% and most preferably from 100 ppmv to 15 vol.% of CO₂ and/or in the range from 10 ppmv to 50 vol.%, more preferably in the range from 50 ppmv to 30 vol.% and most preferably in the range from 50 ppmv to 15 vol.% of H₂S. If the gas is a natural gas, the gas preferably comprises in the range from 1-35 vol.% CO₂. If the gas is a so-called synthesis gas, the gas preferably comprises in the range from 40 to 75 vol.% CO₂.

In addition to CO₂ and/or H₂S the gas can comprise other acid compounds, for example SO₂ (sulfurdioxide), mercaptans, COS (carbonylsulfide) or CS₂ (carbondisulfide).

The absorber may be any type of absorber known by the skilled person in the art to be suitable to carry out the absorption. For example, the absorber may be an absorber comprising a membrane. The membrane can be a membrane that keeps the gas and absorbent composition separate but allows for the absorption of CO₂ and/or H₂S through the membrane.

Preferably, the absorber is operated at a temperature of equal to or less than 50 °C, more preferably equal to or less than 40 °C, still more preferably equal to or less than 35 °C and most preferably equal to or less than 30 °C.

Preferably, the absorber is operated at a temperature of equal to or more than 5 °C, more preferably equal to or more than 10 °C and most preferably equal to or more than 15 °C.

Still more preferably the absorber is operated at a temperature in the range of from 10 to 50 °C, more preferably in a range of more than 10 °C to less than 40 °C, and most preferably in the range from 15 to 30 °C.

Preferably the total pressure in the absorber is in the range from 1.0 to 100 bar. When the gas comprises synthesis gas, a pressure in the range from 20 to 60 bar may be more preferred. When the gas comprises natural gas, a pressure in the range from 50 to 90 bar may be more preferred.

The preferred partial pressure of CO₂ during absorption may vary widely depending on the type of gas that is fed into the absorber. In a preferred embodiment, the absorption in the process according to the invention is carried out at a partial pressure of CO₂ in the range of equal to more than 0.01 bar, more preferably equal or more than 0.05 bar and most preferably equal to or more than 0.15 bar and preferably equal to or less than 0.5 bar, more preferably equal to or less than 0.3 bar and most preferably equal to or less than 0.2 bar.

During regeneration step b) at least part of the CO₂ and/or H₂S is removed from the CO₂ and/or H₂S rich absorbent composition in a regenerator. This step is sometimes also referred to as desorption. The regenerator may be any type of regenerator known by the skilled person in the art to be suitable to carry out the regeneration of the CO₂ and/or H₂S rich absorbent composition. For example, the regenerator may be an regenerator comprising a membrane. The membrane can be a membrane that keeps for example steam and the CO₂ and/or H₂S rich absorbent composition separate but allows for the desorption of CO₂ and/or H₂S through the membrane.

In the process of the invention the regenerator can be operated at extremely low temperature whilst still a substantial amount of CO₂ and/or H₂S is desorbed from the CO₂ and/or H₂S lean absorbent composition.

Preferably, the regenerator is operated at a temperature of equal to or less than 99 °C, more preferably equal to or less than 90 °C, still more preferably equal to or less than 80 °C and even more preferably equal to or less than 75 °C and most preferably equal to or less than 70 °C.

Preferably, the regenerator is operated at a temperature of equal to or more than 30 °C, more preferably equal to or more than 35 °C, still more preferably equal to or more than 40 °C, even more preferably equal to or more than 45 °C and most preferably equal to or more than 50 °C.

More preferably the regenerator is operated at a temperature in the range from 30 °C to less than 100 °C, more preferably from 35 °C to less than 90 °C, still more preferably from 40 °C to less than 80 °C even still more preferably in a range from 45 °C to less than 75 °C and most preferably in a range from 50 °C to 70 °C.

The regenerator may be operated in a wide range of pressures and the specific pressure applied may depend on any potential subsequent steps for the CO₂ and/or H₂S rich gas obtained from the regenerator.

Preferably the regenerator is operated at a total pressure in the range of from 0.001 bar to 50 bar, more preferably from more than 1.0 to 30 bar, still more preferably from 1.5 to 20 bar, still more preferably from 2 to 10 bar.

In a preferred embodiment the regeneration in the process according to the invention is carried out at a partial pressure of CO₂ of equal or more than 0.001 bar, more preferably equal or more than 0.05 bar, and still more preferably equal or more than 0.5 bar. Preferably the regeneration is carried out at partial pressure of CO₂ of equal or less than 6 bar, more preferably equal or less than 3 bar, and still more preferably equal or less than 2 bar.

In a preferred embodiment, the process of the invention further comprises an optional step (c) wherein the CO₂ and/or H₂S lean absorbent composition produced in step b) is cooled, and/or a step e) wherein the, optionally cooled, CO₂ and/or H₂S lean absorbent composition is recycled to step a) to be contacted with the gas in the absorber.

The CO₂ and/or H₂S rich gas obtained in step b) can be pressurized in a compressor. If compressed, the CO₂ and/or H₂S rich gas obtained in step b) is preferably compressed to a pressure in the range of from 20 to 300 bar, more preferably in the range of from 40 to 300 bar and most preferably in the range of from 60 to 300 bar. The pressurised CO₂ and/or H₂S rich gas can be used for many purposes, in particular for enhanced recovery of oil, coal bed methane or for sequestration in a subterranean formation. By injecting CO₂ and/or H₂S into an oil reservoir, the oil recovery rate can be increased.

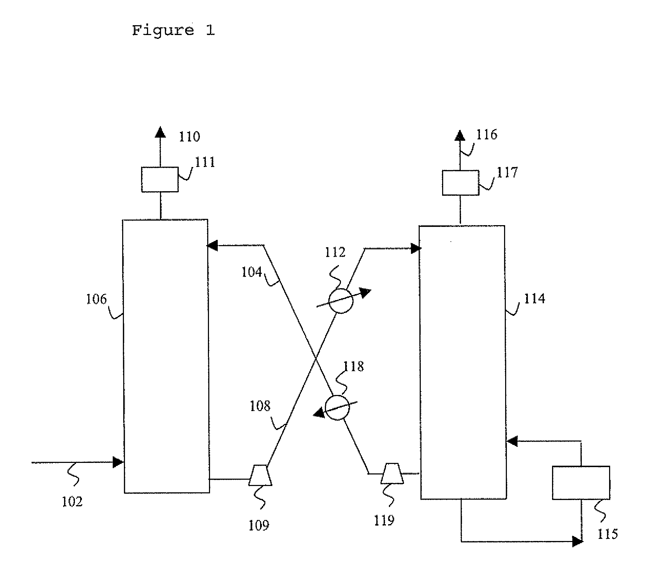

The invention will now be illustrated, by means of example only, with reference to the accompanying figure 1.

In Figure 1 a stream of feed gas (102) comprising CO₂ and/or H₂S is contacted with a stream of an aqueous absorbent composition (104) comprising a polyamine having 3 to 5 amine functions, a tertiary monoamine and water in an absorber (106) at a temperature of about 20°C. In the absorber, CO₂ and/or H₂S is reacted with the polyamine having 3 to 5 amine functions and the tertiary monoamine in the absorbent composition to produce a stream of CO₂ and/or H₂S rich absorbent composition (108) and a stream of treated CO₂ and/or H₂S lean product gas (110). The stream of treated CO₂ and/or H₂S lean product gas (110) is cooled and/or compressed in a recovery unit (111) to recover water and/or amine from the treated CO₂ and/or H₂S lean product gas (110). The stream of CO₂ and/or H₂S rich absorbent composition (108) is forwarded via pump (109), heated in heat exchanger (112) and subsequently regenerated in regenerator (114) to produce a stream of CO₂ and/or H₂S rich product gas (116) and a stream of regenerated CO₂ and/or H₂S lean absorbent composition (104). The regenerator is kept at a temperature of about 60 °C by heater(115). The stream of CO₂ and/or H₂S rich product gas (116) is cooled and/or compressed in a recovery unit (117) to recover water and/or amine from the CO₂ and/or H₂S rich product gas (116). The regenerated CO₂ and/or H₂S lean absorbent composition (104) is cooled in heat exchanger (118) and recycled via pump (119) to absorber (106).

### Examples 1-5 and comparative examples A and B

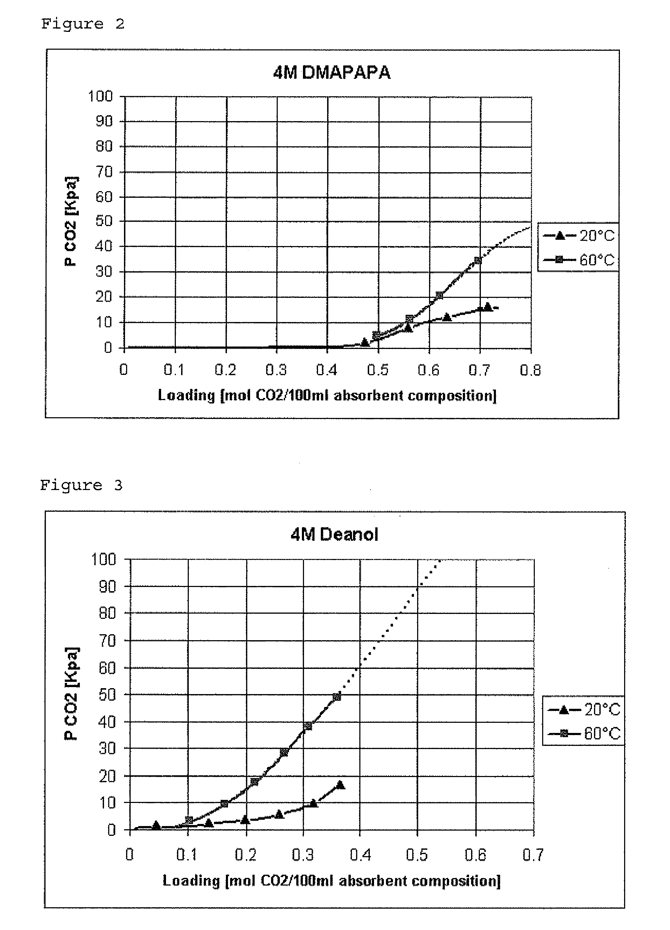

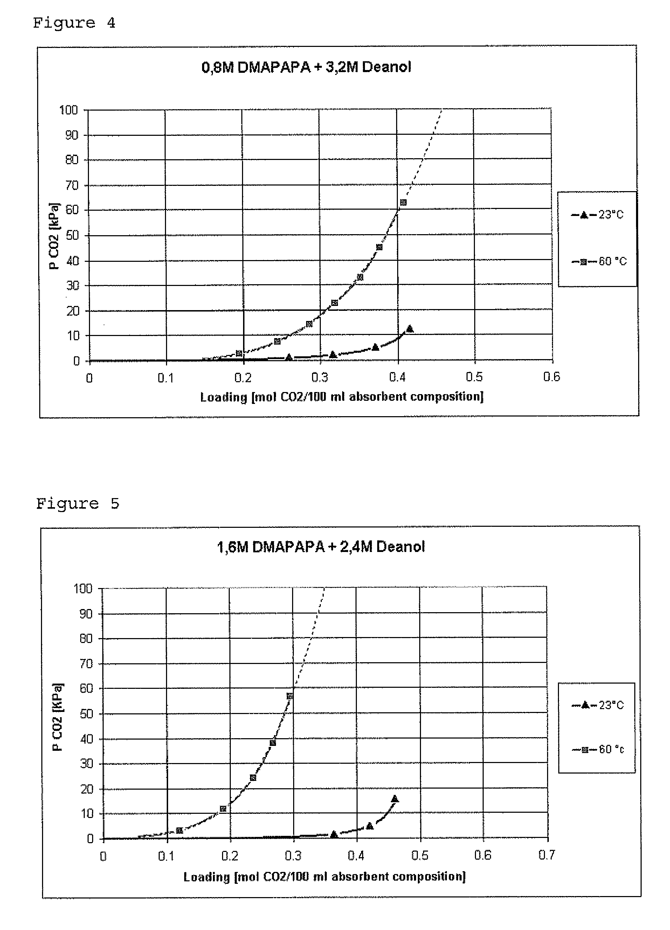

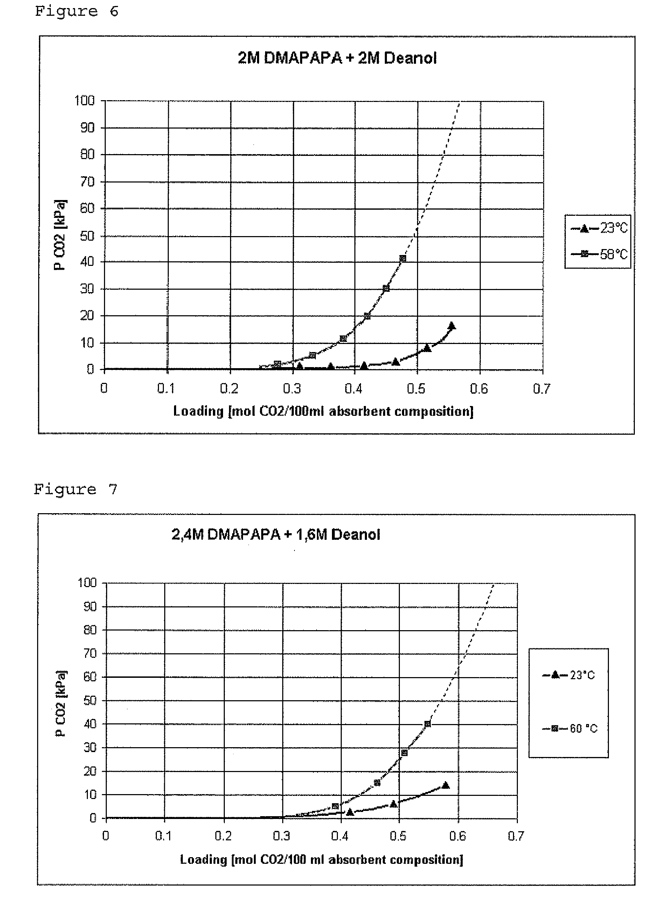

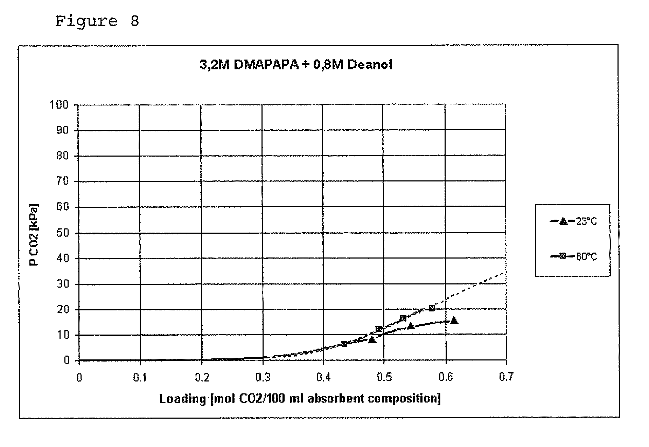

A process using comparative absorbent compositions A and B and absorbent compositions 1-5 according to the invention was tested to illustrate the invention. The absorbent compositions are listed in Table I. In Table I and figures 2 to 8, DMAPAPA refers to N,N-dimethyldipropylenetriamine and Deanol refers to N,N-dimethylethanolamine.

Aqueous test solutions of the absorbent compositions were placed in an aluminium heating block, which allows the temperature of the absorbent compositions during absorption and desorption to be precisely controlled. The aluminium heating block was heated via an electrical heating device. The temperature of the aluminium heating block was continuously monitored by thermocouples.

A stream of feed gas comprising 15 vol.% of CO₂ in nitrogen was prewetted and subsequently contacted at 23 °C with 100 ml of the absorbent compositions as listed in table I. The feed gas was dispersed through the absorbent composition at a flowrate of 5 Nl/hr (Normal-liter per hour at standard conditions of 1013 mbar and 0 °C) during 40 hours. Hereafter, the absorbent compositions were saturated with CO₂. The flowrate of the feed gas entering the absorbent composition was accurately measured by mass flow meter. The composition of the gas leaving the absorbent composition was monitored by gas chromatography (GC), allowing for a precise measurement of the amount of CO₂ absorbed by the absorbent compositions. The CO₂ loading at about 23 °C, reflecting the moles CO₂ per 100ml absorbent composition at about 23 °C and several CO₂ partial pressures, is illustrated in figures 2 to 8 for each absorbent composition. The CO₂ loading at about 23 °C and a CO₂ partial pressure of 15 KPa (0.15 bar), was determined and listed in Table I.

After saturation the absorbent compositions were removed from the aluminium heating block and the alumium heating block was heated to a temperature of about 60 °C.

Subsequently the absorbent compositions were placed back into the aluminium heating block and CO₂ was removed from the absorbent compositions by dispersing a flow of nitrogen of 3 Nl/hr through the absorbent compositions during 40 hours generating a CO₂ rich gas. The temperature in the alumium heating block and the temperature inside the absorbent compositions was measured by means of thermocouples.

The CO₂ concentration in the obtained CO₂ rich gas was determined by Gas Chromatography. The CO₂ loading at about 60 °C, reflecting the moles CO₂ per 100 ml absorbent composition at about 60 °C and several CO₂ partial pressures is illustrated in figures 2 to 8 for each absorbent composition. The CO₂ loading at about 60 °C and at a CO₂ partial pressure of 100 KPa (1 bar) was determined by means of a 3th order polynomial extrapolation in Microsoft Excell and listed in Table I. The delta loading listed in Table I for each absorbent composition can be calculated by substracting the CO₂ loading at about 60 °C and a CO₂ partial pressure of 100 KPa (1 bar) from the CO₂ loading at about 23 °C and a CO₂ partial pressure of 15 KPa (0.15 bar). This delta loading reflects the moles of CO₂ per 100 ml absorbent composition) that are released during regeneration when the specific absorbent composition is used under absorption conditions of 23 °C and a CO₂ partial pressure of 15 KPa (0.15 bar) and regeneration conditions of 60 °C and a CO₂ partial pressure of 100 KPa (1 bar).

As can be seen from Table I, the absorbent composition of example 2 allows for a regeneration carried out at a temperature as low as 60 °C. When the regeneration temperature is increased other absorbent compositions may allow for a similar regeneration.

**Table I**

| Ex. | molair polyamine (wt%) | molair tertiary monoamine (wt%) | molar ratio of polyamine to tertiary monoamine | CO2 Loading at 23 °C and 0.15 bar (mol CO₂/ 100 ml abs. comp.) | CO2 Loading at 60 °C and 1 bar (mol CO₂/ 100 ml abs. comp.) | Delta Loading (mol CO₂/100 ml absorbent composition) |
|---|---|---|---|---|---|---|
| A | 4m DMAPAPA (63.72w%) | - | n.a. | 0.36 | > 0.55 | < -0.19 |
| B | - | 4m Deanol (35.65w%) | n.a. | 0.73 | >0.75 | < -0.02 |
| 1 | 0.8m DMAPAPA (12.74w%) | 3.2m Deanol (28.52w%) | 1:4 (0.25) | 0.41 | 0.46 | -0.05 |
| 2 | 1.6m DMAPAPA (25,49w%) | 2.4m Deanol (21.39w%) | 2:3 (0.66) | 0.46 | 0.35 | 0.11 |
| 3 | 2m DMAPAPA (31.86w%) | 2m Deanol (17.83w%) | 1:1 (1.0) | 0.55 | 0.57 | -0.02 |
| 4 | 2.4m DMAPAPA (38.23w%) | 1.6m Deanol (14.26w%) | 3:2 (1.5) | 0.57 | 0.66 | -0.09 |
| 5 | 3.2m DMAPAPA (50.98w%) | 0.8m Deanol (7.1.3w%) | 4:1 (4) | 0.61 | >0.7 | < -0.09 |

## Claims

1. A process for removing CO₂ and/or H₂S from a gas comprising CO₂ and/or H₂S, the process comprising the steps of:
(a) contacting the gas in an absorber with an absorbent composition at a temperature in the range from 5 to 60 °C, wherein the absorbent composition absorbs at least part of the CO₂ and/or H₂S in the gas, to produce a CO₂ and/or H₂S lean gas and a CO₂ and/or H₂S rich absorbent composition;
(b) removing at least part of the CO₂ and/or H₂S from the CO₂ and/or H₂S rich absorbent composition in a regenerator operated at a temperature below 100 °C, to produce a CO₂ and/or H₂S rich gas and a CO₂ and/or H₂S lean absorbent composition;
wherein the absorbent composition comprises a polyamine, a monoamine and water,
wherein the polyamine comprises a polyamine having 3 to 5 amine functions;
wherein the monoamine comprises a tertiary monoamine; and
wherein the molar ratio of the polyamine having 3 to 5 amine functions to the tertiary monoamine is equal or less than 4:1.

2. The process of claim 1, wherein the regenerator is operated at a temperature equal to or below 90 °C and the molar ratio of the polyamine having 3 to 5 amine functions to the tertiary monoamine is equal or less than 1:1.

3. The process of claim 1, wherein the regenerator is operated at a temperature equal to or below 75 °C and the molar ratio of the polyamine having 3 to 5 amine functions to the tertiary monoamine lies in the range from more than 1:4 to less than 1:1.

4. The process of anyone of claims 1 to 3, wherein the polyamine having 3 to 5 amine functions is a non-cyclic polyamine having 3 to 5 amine functions and/or the tertiary monoamine is a non-cyclic tertiary monoamine.

5. The process of anyone of claims 1 to 4, wherein the polyamine comprises a polyamine having 3 to 4 amine functions.

6. The process of anyone of claims 1 to 5, wherein the total weight percentage of polyamine and monoamine is less than 70 wt% based on the total absorbent composition.

7. The process of anyone of claims 1 to 6, wherein the polyamine having 3 to 5 amine functions is a polyamine of formula I: 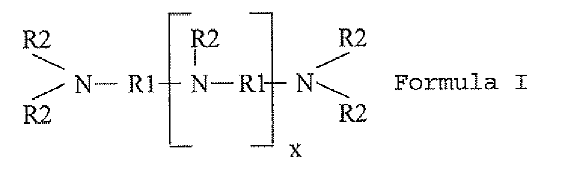 wherein each R1 independently represents a substituted or non-substituted alkylene group comprising 1 to 6 carbon atoms; wherein each R2 independently represents hydrogen, a hydroxyl group or a hydrocarbyl group comprising 1 to 12 carbon atoms; and wherein x can be 1, 2 or 3.

8. The process of anyone of claims 1 to 7, wherein the polyamine comprises diethylenetriamine, dimethylaminopropylaminopropylamine or a combination thereof.

9. The process of anyone of claims 1 to 8, wherein tertiary monoamine is a monoamine of formula II: 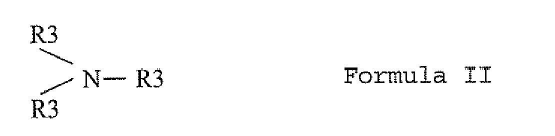 wherein each R3 independently can represent a hydroxyl group or a hydrocarbyl group comprising 1 to 6 carbon atoms.

10. The process of anyone of claims 1 to 9, wherein the monoamine comprises dimethylethanolamine, diethylmonoethanol amine or a combination thereof.

11. The process of anyone of claims 1 to 10, wherein the CO₂ and/or H₂S lean absorbent composition obtained in step b) is recycled to step a) to be contacted with the gas in the absorber.
